# EUROPEAN PATENT SPECIFICATION

(11) **EP 3 399 584 B1**
(45) Date of publication and mention of the grant of the patent: **27.11.2019**
(21) Application number: 16881585.0
(22) Date of filing: 01.12.2016
(51) Int. Cl.: H01M 4/134, H01M 4/1395, H01M 10/04, H01M 10/44, H01M 10/052, H01M 4/38, H01M 4/36, H01M 4/587

(54) **HIGH-CURRENT PROCESSING FOR LITHIUM ION BATTERY HAVING METAL-BASED NEGATIVE ELECTRODE**
HOCHSTROMVERARBEITUNG FÜR LITHIUM-IONEN-BATTERIE MIT NEGATIVELEKTRODE AUF METALLBASIS
TRAITEMENT À COURANT FORT POUR BATTERIE LITHIUM-ION AYANT UNE ÉLECTRODE NÉGATIVE À BASE DE MÉTAL

(30) Priority: 30.12.2015 US 201514984541
(43) Date of publication of application: 07.11.2018
(73) Proprietor: Nissan Motor Co., Ltd., Yokohama-shi, Kanagawa 221-0023 (JP)
(72) Inventor: WEBER Jessica, Atsugi-shi Kanagawa 243-0123 (JP); OSHIHARA Kenzo, Atsugi-shi Kanagawa 243-0123 (JP)
(74) Representative: Grünecker Patent- und Rechtsanwälte PartG mbB
(86) International application number: PCT/JP2016/085686
(87) International publication number: WO 2017/115605

(56) References cited:
- EP-A1- 2 838 176
- EP-A2- 1 562 250
- JP-A- 2001 176 560
- JP-A- 2009 224 119
- JP-A- 2011 175 945
- JP-A- 2014 036 009
- JP-A- 2014 036 009
- US-A1- 2009 305 131

## Description

### TECHNICAL FIELD

This disclosure relates to lithium ion batteries and methods for making the same, and in particular to methods for improving low temperature lithium ion battery performance and lithium ion batteries with improved rate capacity profiles.

### BACKGROUND ART

Hybrid vehicle (HEV) and electric vehicles (EV) use chargeable-dischargeable power sources. Secondary batteries such as lithium-ion batteries are typical power sources for HEV and EV. Certain types of lithium-ion secondary batteries use conductive metal and metal-based alloy material as the anode electrode. Lithium ion batteries having metal or metal alloy anodes suffer rapid capacity fade, poor cycle life and poor durability and exhibit lower discharge retention rates at elevated C-rates as well as irregular dependence of discharge capacity retention percentage as a function of C-rate. One cause of the decrease in discharge capacity retention percentage is due to damage in the electrode microstructure caused by multiple battery cycling evidenced the development of delamination sites and large cracking networks propagating in the structure. This deteriorative phenomenon leads to electrode delamination, loss of porosity, electrical isolation of the active material, rapid capacity fade and ultimate cell failure.

Patent Literature 1 discloses a method for preparing a lithium ion secondary battery having high low-temperature pulse discharging performance and low-temperature charging performance, promoted safety upon overcharge, and high heat resistivity. Patent Literature 1 discloses that the lithium ion secondary battery including a cathode, an anode, a separator, and a non-aqueous electrolyte solution is subjected to heat treatment at high temperature during being charged, and then subjected to charge-discharge treatment including at least one high-load constant-current discharge treatment of 1.5 C or higher. Document JP2014036009 discloses a method for preparing a lithium ion battery, wherein the charge/discharge is performed by high-rate at 10C.

### CITATION LIST

### PATENT LITERATURE

Patent Literature 1: Japanese Patent Unexamined Publication No. 2004-030939

### SUMMARY OF INVENTION

A method for preparing a lithium ion battery having at least one unit cell in which the unit cell has a cathode, a separator, an electrolyte and a metal based anode that includes a metal based alloy overlaying a metal current collector. The metal based alloy has alloying particles present therein. The method includes the step of applying a high C-rate discharging current to the unit cell, the high C-rate discharging current (C_{HD}) sufficient to secure conductive pathways in at least one structure present in the unit cell, wherein the high C-rate discharging current (C_{HD}) applied is greater than a C-rate operating current (C_{O}) passing through the metal-based anode and, after the application of the discharging current (C_{HD}) has been discontinued, applying a high C-rate charging current to the unit cell to charge the unit cell to an elevated state of charge which is at or above 90% of a maximum state of charge for the unit cell, the high C-rate charging current having a value greater than the C-rate operating current (C_{O}) passing through the metal-based anode, wherein the high C-rate charging current is applied at a C-rate between 3C and 6C, and wherein the high C-rate discharging current (C_{HD}) is applied in a range between 3C and 7C.

These and other aspects of the present disclosure are disclosed in the following detailed description of the embodiments, the appended claims and the accompanying figures.

### BRIEF DESCRIPTION OF DRAWINGS

The invention is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity. Included in the drawings are the following figures:

[Fig. 1A] Fig. 1A is flow chart depicting a method for preparing a lithium ion battery according to embodiments as disclosed herein.
[Fig. 1B] Fig. 1B is flow chart depicting a method for preparing a lithium ion battery according to embodiments as disclosed herein.
[Fig. 2A] Fig. 2A is flow chart depicting alternate embodiments of the method for preparing a lithium ion battery as disclosed herein.
[Fig. 2B] Fig. 2B is flow chart depicting alternate embodiments of the method for preparing a lithium ion battery as disclosed herein.
[Fig. 3] Fig. 3 is a flow chart depicting a second alternate embodiment of a method for preparing a lithium ion battery as disclosed herein.
[Fig. 4] Fig 4 is a cross-sectional view of a region of a metal alloy anode and associated structure of a representative unit cell of lithium ion battery according to the prior art.
[Fig. 5] Fig. 5 is a cross-sectional view of a region of a metal alloy anode and associated structure of a unit cell of a lithium ion battery produced according to an embodiment as disclosed herein.
[Fig. 6A] Fig. 6A is graphic depiction of discharge capacity retention vs delithiation rate for a lithium ion battery of Fig. 4.
[Fig. 6B] Fig. 6B is graphic depiction of discharge capacity retention vs delithiation rate for a lithium ion battery of Fig. 5.
[Fig. 7A] Fig. 7A is scanning electromicrographic view of the top of the anode of Fig. 4.
[Fig. 7B] Fig. 7B is scanning electromicrographic view of the top of anode of Fig. 5.
[Fig. 8A] Fig. 8A is detail view of a conceptual schematic of an embodiment of the alloy structure of an electrode as disclosed herein after formation.
[Fig. 8B] Fig. 8B is detail view of a conceptual schematic of an embodiment of the alloy structure of an electrode as disclosed herein after lithiation upon initial charging.
[Fig. 9] Fig. 9 is a detail view of the electrode detail of Fig. 8B after a slow discharge step.

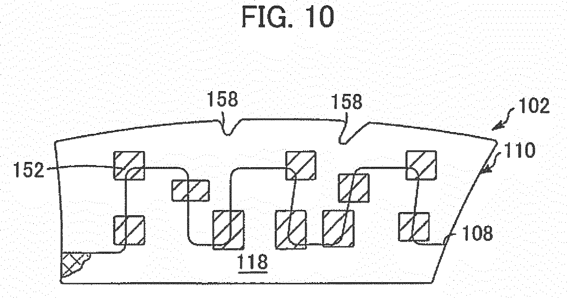

[Fig. 10] Fig. 10 is detail view of the electrode detail of Fig. 8B after application of high current discharge according to an embodiment of the method disclosed herein.

### DESCRIPTION OF EMBODIMENTS

Lithium ion batteries using metal-based alloy anodes suffer from poor rate capability. This poor rate capability limits the applications for such batteries. Based on rate capability analysis, it has been found that batteries having metal-based alloy anodes exhibit a monotonous decrease in performance as C-rate increases. It is believed that this phenomenon is due, at least in part to the compromise in electronic conductive pathways defined through the anode structure to the current collector which become compromised due to one or more of cracking and delamination of the active material, solid electrolyte interface (SEI) layer overgrowth due to side reactions, electrolyte decomposition. Each of these, in turn, can lead to increases in resistance. Impairment of the electronic conductive pathway can cause lithium ion diffusion to become blocked or impaired.

To address the poor energy density of carbon based electrodes, alternative active materials with higher energy densities are desired. Alloying particles such as silicon, tin, germanium and their oxides and alloys are non-limiting examples of materials that may be added to an electrode active material layer to improve its energy density, among other benefits. In certain applications, electrodes can be constructed that have regions of carbon-based material such as graphite as well as regions containing alloying particles.

Electrode materials such as silicon, germanium, or tin react with lithium via a mechanism different from that of graphite. Lithium forms alloys with electrode material such as silicon in a process that involves breaking the bonds between host atoms, causing dramatic structure changes in the process. Since alloying materials such as silicon, germanium, or tin do not constrain the reaction, anode materials that form alloys can have much higher specific capacity than intercalation electrode materials such as graphite. Anode-active materials such as silicon, germanium, tin and the like suffer from rapid capacity fade, poor cycle life and poor durability. One primary cause of this rapid capacity fade is the massive volume expansion of these materials (typically up to 300%) and structural changes due to lithium insertion. Repeated volume expansion of materials such as silicon can cause particle cracking and pulverization when the silicon has no room to expand, which leads to delamination of the active material layer from the current collector, electrical isolation of the fractured or pulverized active material, capacity fade due to collapsed conductive pathways, and increased internal resistance over time.

The present disclosure is predicated on the unexpected discovery that assembly and treatment processes such as those disclosed can produce metal alloy anodes and associated lithium ion batteries that exhibit a stable, flat dependence of discharge capacity retention as a function of C-rate.

As depicted in Fig, 1A, the method 10 for producing a lithium ion battery includes application of a suitable formation cycle to prepare a lithium ion battery having at least one unit cell as depicted at reference numeral 20. The battery formation cycle can have any suitable steps to produce a unit cell having a metal-based anode, a cathode, a separator and electrolyte in operative orientation to one another.

The metal-based anode employed can be one composed of a metal alloy, more particularly a copper based metal alloy including copper and at least one element alloyed with copper. Non-limiting examples of materials that alloy with copper to produce the metal based anode in the unit cell include at least one of tin, molybdenum, niobium, tungsten, tantalum, and iron. Such alloy materials can be present in the alloy in suitable ratios based on cell requirements. The metal alloy can also include alloying particles. The alloying particles can be silicon-based, germanium-based or tin-based, for example. The silicon-based particles can be silicon, a silicon alloy, a silicon/germanium composite, silicon oxide and combinations thereof. The tin-based particles can be tin, tin oxide, a tin alloy and combinations thereof. The alloying particles therefore preferably contain at least one element selected from the group consisting of silicon, germanium, tin, silicon oxide, germanium oxide, and a mixture thereof. Other high energy density materials known to those skilled in the art are also contemplated. As discussed above, this high capacity for lithium ions results in large volume expansions of the alloying particles.

Where desired, the metal-based anode can have an active material coating such as graphite and the like on the metal alloy structure. In the anode as disclosed, a metal alloy based material can be in overlying relationship to a current collector and can function as an active material in the unit cell. It is also contemplated that an electroactive material such as graphite can be deposited on the alloy material. The current collector composition and thickness can vary based on cell requirements. In certain embodiments, the current collector can be a metal foil material such as copper.

A cathode active material included in the cathode is not particularly limited, and may be a lithium-based composition selected as appropriate. Examples of cathode active materials include LiCoO₂, LiNi_{0.8}Al_{0.05}Co_{0.15}O₂, LiNi_{1/3}Mn_{1/3}Co_{1/3}O₂, LiMn₂O₄, and LiFePO₄. The separator is not particularly limited, and may be a polyolefin film having fine pores in a range between 0.01 µm and 0.1 µm and a thickness in a range between 10 µm and 30 µm. The electrolyte is not particularly limited, and may be an electrolyte solution in which lithium salt is dissolved in an organic solvent, a polymer electrolyte in which a polymer such as polyethylene oxide is combined with lithium salt, an inorganic solid electrolyte in which lithium ions move in glass or a crystalline solid, or an ion liquid in which lithium salt is dissolved.

The various structures present in the unit cell can have such thicknesses and configurations as dictated by battery conditions and performance requirements. The electrolyte composition and additive as well as the porosity of the active material can vary based on unit cell requirements.

The lithium ion battery preparation method as disclosed will include the step of applying a C-rate discharging current to the prepared unit cell as at reference numeral 30. The value of the C-rate discharging current that is employed is one that activates the alloying particles at an activation speed (As) such that the activation speed during discharge is greater than the rate at which the alloying particles contract upon delithiation during discharge, referred to as the contraction rate (R_{C}). The application of the specified C-rate discharging current results in an anode exhibiting decreases in fracture or pulverized active material, decreases in capacity fade due to collapsed conductive pathways, and reduction in increased internal resistance over time. Without being bound to any theory, it is believed that application of C-rate discharging current at defined value (C_{D}) will result in delithiation while maintaining the alloying particles in an expanded volume.

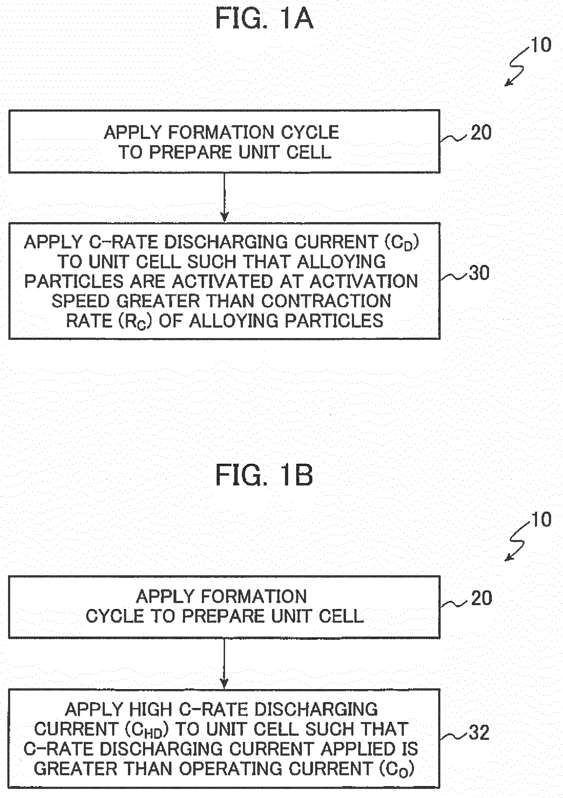

In certain embodiments such as the method as depicted in Fig. 1B, the method includes the step of applying a suitable formation cycle to prepare the unit cell as depicted at reference numeral 20 followed by application of high C-rate discharging current (C_{HD}). As used herein, high C-rate discharging current (C_{HD}) is defined as a value greater than the value of the C-rate operating current (C_{O}) passing through the anode during normal use of the lithium ion battery. The high C-rate discharging current (C_{HD}) has a range between 3C and 7C.

The C-rate discharging current (C_{D}) such as the high C-rate discharging current (C_{HD}) can reduce the state of charge (SOC) in the associated unit cell to a target depleted level. The C-rate discharging current (C_{D}) can be applied for a time interval suitable to secure electronic conductive pathways in a least one structure present in the anode such as the alloy material overlying the current collector. In certain embodiments, it is believed that conductive pathways can be secured by application of C-rate discharging current (C_{D}) and/or high C-rate discharging current (C_{HD}) for an interval sufficient to reduce SOC to a level of 10% maximum charge. In certain instances, SOC will be reduced to a level less than 5% of maximum charge. In many instances, the SOC will be reduced to 0% of maximum charge. It is understood that the total discharge interval can vary based on factors such as the particular capacity of the associated cell and/or the C-rate value employed.

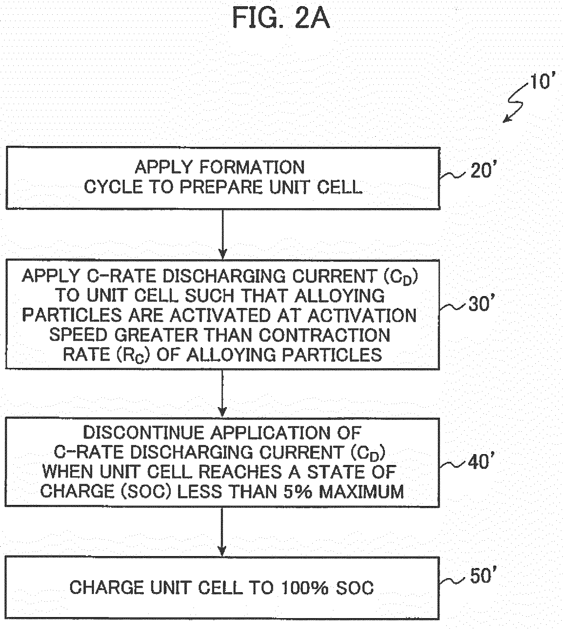

In the method 10' depicted in the flow chart in Fig. 2A, the method for forming a lithium ion battery includes the step of applying formation cycle to prepare the unit cell as at reference numeral 20'. After the formation step is completed, a discharging current (C_{D}) is applied to the unit cell such that alloying particles are activated at an activation speed (As) that is greater than the contraction rate (R_{C}) of alloying particles. Application of the discharging current (C_{D}) is discontinued when the unit cell reaches a state of charge (SOC) less than 5% of maximum charge as at reference numeral 40'. After the unit cell has reached the lower state of charge value, the unit cell is charged to 100% SOC by application of charging current (C_{C}) as at reference numeral 50'. In certain applications, the charging current (C_{C}) can have a C-rate value that is less than the C-rate value of the discharging current (C_{D}) previously applied. Suitable C-rate values for the charging current (C_{C}) are C-rates between 3C and 6C. Charging current C-rates between 3C and 6C are employed following high C-rate discharging current (C_{HD}) application. The high C-rate charging current (Cc) has a value greater than the C-rate operating current (Co) passing through the anode during the use of the lithium ion battery.

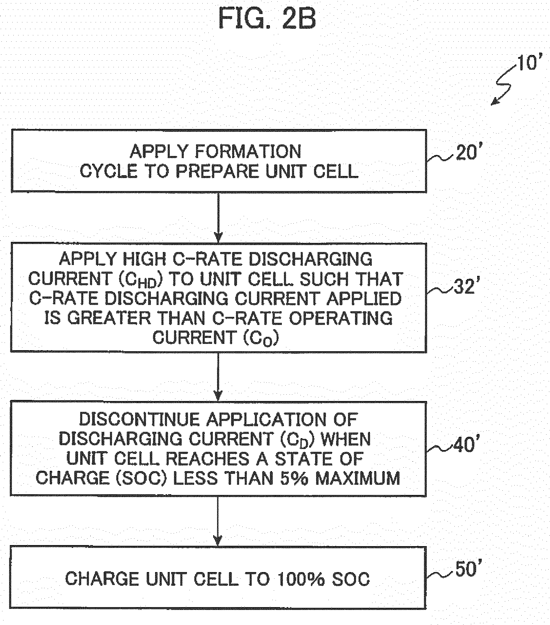

In the method 10' as depicted in Fig. 2B, the process proceeds with the application of high C-rate discharging current (C_{HD}) having a value that is greater than the C-rate operating current (C_{O}) as at reference numeral 32'. Application of the high C-rate discharging current (C_{HD}) is discontinued when the unit cell reaches a state of charge (SOC) less than 5% of maximum charge as at reference numeral 40'. After the unit cell has reached the lower state of charge value, the unit cell is charged to 100% SOC by application of charging current (C_{C}). The charging current (C_{C}) will have a C-rate value that is less than the C-rate value of the high discharging current (C_{HD}) as at reference numeral 50'. The C-rate of the discharging current (C_{HD}) can be a steady value in the range defined (i.e. 3C to 7C) or can vary within the range defined. The interval for application of charging current can vary based on the capacity of the particular unit cell and/or the C-rate employed.

It has been found that one cycle of C-rate discharge current application at the defined rates followed by charging to 100% SOC administered prior to operation of the associated battery provides a lithium ion battery that demonstrates improved discharge capacity retention during cycling over that which occurs in routine battery operation of similarly structured battery units.

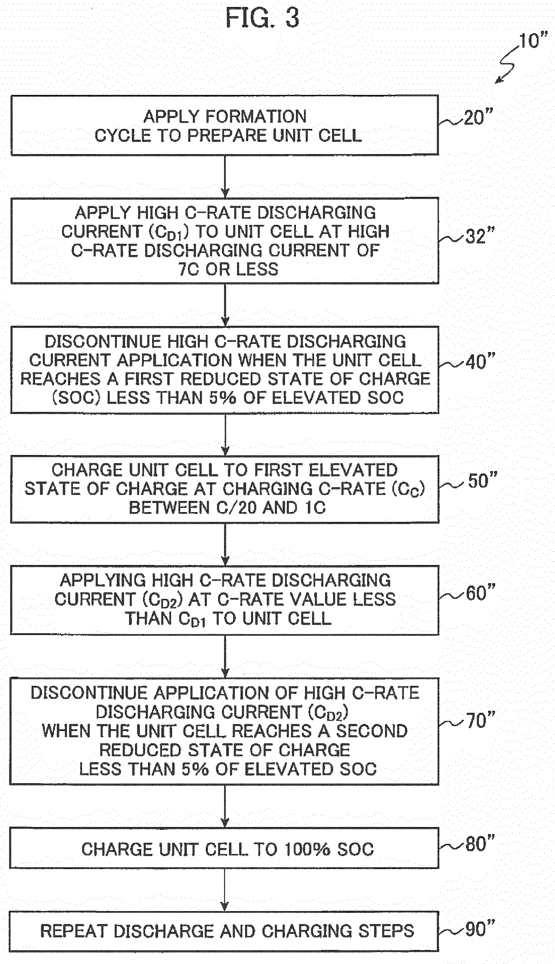

The present disclosure also contemplates methods for preparing a lithium ion battery that includes at least two discharge/charge iterations. One non-limiting example of such a method is outlined in Fig. 3. The unit cell can be prepared by the application of a suitable formation cycle as at reference numeral 20". The prepared unit cell can then be subjected to application of a high C-rate discharging current (C_{D1}) at a C-rate between 3C and 7C as illustrated at reference numeral 30". Application of high C-rate discharging current (C_{D1}) can continue for an interval sufficient to reduce the state of charge (SOC) in the unit cell to a lowered state of charge value which is defined as SOC less than 5% of maximum. In many situations, the lowered state of charge value will be an SOC at or near 0% of maximum. Once the unit cell reaches the lowered state of charge value, application of high C-rate discharging current (C_{D1}) is discontinued as at reference numeral 40".

Once the unit cell reaches the lowered state of charge value and high C-rate discharging current (C_{D1}) is discontinued, the application of charging current (C_{C}) can be applied to the unit cdl as at reference numeral 50". This can occur at rate values between C/20 and 1C and proceeds for an interval sufficient to provide the unit cell with an elevated state of charge. In certain embodiments, it is contemplated that rate values between 3C and 6C can be employed during the charging step. The high C-rate charging current (C_{C}) may be greater than the C-rate operating current (C_{O}) passing through the anode during the use of the lithium ion battery. The elevated state of charge may be any value that is above the previously lowered stated of charge value previously achieved. In certain embodiments, the elevated state of charge achieved in this process step will be at or above 90% of maximum SOC for the unit cell; while in other embodiments, the elevated state of charge will be a value at or near 100% maximum SOC for the unit cell. The interval for application of the charging current (C_{C}) is dependent on factors such as the C-rate value of the charging current (C_{C}) applied, the capacity and/or configuration of the specific unit cell, or both.

Once the unit cell reaches the elevated state of charge, the application of charging current (C_{C}) can be discontinued and a high C-rate discharging current (C_{D2}) applied as at reference numeral 60" of Fig. 3. The high C-rate discharging current (C_{D2}) will have a value that is reduced or decremented from high C-rate discharging current (C_{D1}) previously employed. In certain embodiments, the high C-rate discharging current (C_{D2}) can be between 0.25C and 2C less than the high C-rate discharging current (C_{D1}) previously applied to the unit cell. As a non-limiting example, if the initial high C-rate discharging current (C_{D1}) is 7C, the immediately subsequent high C-rate discharging current (C_{D2}) may have a value of 6C.

The decremented high C-rate discharging current (C_{D2}) will be applied until the SOC in the unit cell is reduced to a state of charge at or less than the lowered state of charge previously achieved. Once the second lowered state of charge has been reached, application of the decremented high C-rate discharging current (C_{D2}) is discontinued as depicted in Fig. 3 at reference numeral 70". The interval necessary to achieve the second lowered state of charge is dependent on factors such as the capacity and/or configuration of the specific unit cell, the C-rate of the discharging current (C_{D2}), etc.

Once the second lowered state of charge is reached, the unit cell can be charged to an elevated state of charge as at reference numeral 80". This can occur by application of a charging current (C_{C}) having a C-rate value. In certain applications, the C-rate value of the charging current can be between C/20 and 1C, provided that the C-rate value of the charging current is between 3C and 7C in at least step 50"; in other applications it is contemplated that the C-rate value of the charging current can be between 3C and 7C. The elevated state of charge achieved can be at or above 90% of the maximum SOC; while in other embodiments, the elevated state of charge will be a value at or near 100% of the maximum SOC. As with prior charging cycles, the interval for application of the charging current (C_{C}) can vary based on factors such as the C-rate value of the charging current (C_{C}), the capacity and/or configuration of the specific unit cell, or both. The charging current (C_{C}) applied in this subsequent charging step can have the same value as that applied previously or can differ from that charging current initially applied.

The charging steps and discharging steps can be repeated through multiple iterations sequentially reducing the high C-rate discharging current with each iteration until the high C-rate discharging current applied has a defined lower value. The defined lower value is greater than 0.1C. This is depicted at reference numeral 90" in Fig. 3. In certain embodiments of the method as disclosed, the final discharging current value that is applied will be approximately 3C.

The sequential reductions in discharging current can be in any suitable decreasing sequence; non-limiting examples include equal value intervals, logarithmic intervals, inverse logarithmic intervals and the like. One example of a decreasing discharge sequence would be discharge proceeding for one cycle each at 7C, 5C, 3C, 1C, 0.1C.

The method disclosed can also include multiple charging step iterations in the values previously noted. The multiple charging step iterations can be incremented as desired or required. In certain embodiments, the charging step iterations can progress from lowest to highest in increments similar to the increments employed in the high C-rate discharge steps.

The lithium ion battery that may be produced by the method as disclosed may be one that includes a unit cell having a metal-based anode having a current collector, and an active material structure formed of a suitable metal alloy and an electroactive material coating the surface of the metal alloy structure. The resulting anode is characterized by at least one area defined as a spongy region having a conductive network of a suitable metal with alloying particles present within the network defined charge conduit extending through the active material layer to the current collector.

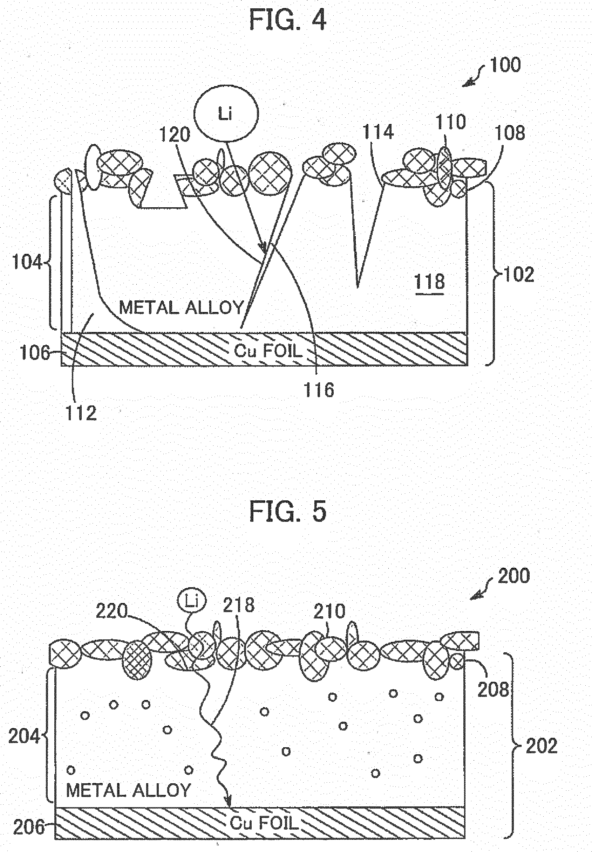

A schematic cross-sectional depiction of a representative anode 102 and associated structure 100 present in a lithium ion battery prepared according to methods known in the prior art after five plus operative cycles is depicted in Fig. 4. The representative anode 102 is composed of a metal alloy-based region 104 comprising a metal material such as copper and at least one alloying particle material capable of alloying with the metal material. Suitable alloying particle material can be materials that, under suitable circumstances, react with lithium ions in a reversible reaction to produce lithiated complexes in the metal material. Non-limiting examples of such materials include materials that alloys with copper such as tin, silicon, germanium, molybdenum, niobium, tungsten, tantalum, iron. In the anode construction, the metal alloy material is in overlying relationship to a current collector 106. The metal alloy-based region 104 has an outer surface 108 opposed to the current collector 106. The outer surface 108 is in contact with an active material layer 110. The active material layer 110 can be composed of electroconductive materials such as graphite. It is contemplated that the electroconductive material as well as the alloy material will be configured to permit migration and reversible intercalation of lithium ions during charge and discharge cycles.

As depicted in Fig, 4, after at least five charge-discharge cycles, the active material layer 110 as well as the metal alloy based region 104 is marked by areas of visible delamination such as areas 112 as well as fissures 114 and/or shafts 116 that extend into the body 118 of the metal alloy based region 104. The fissures 114 and/or shafts 116 may extend through to the current collector 106 or may terminate at a location in the body 118 of the metal alloy-based region 104 and/or the active material layer 110. The delamination areas 112, fissures 114 and/or shafts 116 can interrupt charge pathways 120 defined in the metal alloy-based region 104.

In contrast, a cross-sectional representation of anode 202 and associated structure 200 produced according the method as disclosed herein after five-plus operative cycles is depicted in Fig. 5. The anode 202 is composed of a metal alloy-based region 204 comprising a metal material such as copper and at least one metal that alloys with copper such as tin, silicon, germanium, molybdenum, niobium, tungsten, tantalum, iron in overlying relationship to a current collector 206. The material in the metal alloy based-region 204 can be suitably porous in order to accommodate reversible migration of lithium ions. The metal alloy-based region 204 has an outer surface 208 in contact with the active material layer 210. In various embodiments, the active material layer can be composed of a suitable electroactive material such as graphite, graphene or the like. The metal alloy-based region 204 can accommodate a plurality of defined electronically conductive pathways 218 that extend uninterrupted from the active material layer 210 located on the outer surface 208 of the metal alloy-based region 204 to the current collector 206. The metal alloy-based region 204 is an essentially continuous body having a plurality of pores such as surface pores 220 defined on the surface of the metal alloy-based region 204 and in its interior.

The lithium ion battery that incorporates anode 202 exhibits stable discharge capacity retention over five plus cycles.

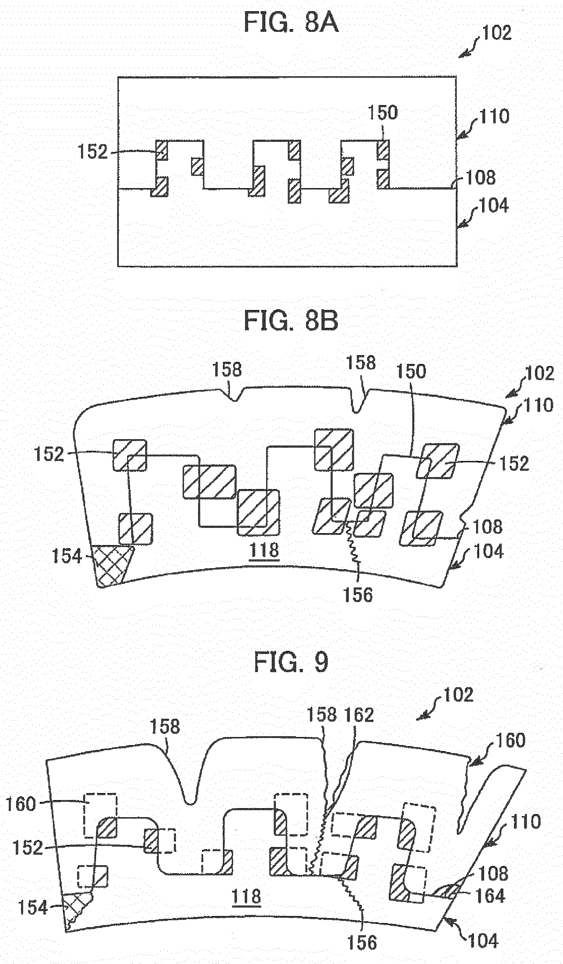

To further illustrate the invention as disclosed herein, attention is directed to Figs. 8 and 9 that provide a detail diagram of the structure of anodes and the effect of operation of the associated battery with and without the treatment method disclosed herein. A detail view of a respective region of anode 102 in the manufactured state is depicted in Fig. 8A. The outwardly oriented surface 108 of metal based alloy layer 104 is configured with geometric depictions 150 which are non-limiting conceptual representations of the spongy structure of the associated material. A active material layer 110 such as graphite overlays the surface 108 of the metal-based alloy layer 104. The metal-based alloy layer 104 includes alloying particles 152 that are dispersed within the metal matrix. In certain embodiments, the alloying particles 152 can be a material that expands upon lithiation. Non-limiting examples of such materials include one or more of silicon-based materials such as silicon and silicon oxide and combinations thereof, tin-based material such as tin and tin oxide and combinations thereof, and/or germanium-based materials such as germanium, germanium oxide, oxide with silicon and mixtures thereof.

A representation of anode 102 after initial charging is depicted in Fig. 8B. Upon charging, the alloying particles experience volume expansion as the particle material reacts to for a lithiated particle complex. The lithiated particle complex 152 can expand and displace into the body 118 of the active material layer 110. Particle expansion may also occur with displacement into the metal-based alloy layer 104. Expansion may result in lithiated particle complexes abutting one another as illustrated in Fig 8A. Volume expansion in the lithiated particle complexes 152 can result in limited delamination regions 154 as well as localized cracking in the metal-based alloy material as at reference numeral 156. Some minor amounts of surface cracking can also be evidences as at reference numeral 158.

A representative illustration of the anode 102 after initial slow discharge is depicted in Fig. 9. Slow discharge of the anode results in shrinkage of the alloying particles 152 back to their pre-charge volume as delithiation occurs. This produces voids 160 that are defined primarily in the active material layer 110. Shrinkage of alloying particles causes propagations of surface cracks 158 initiated during the charging interval and can produce new surface cracks such as crack 160. Additionally cracks 156 located in the metal-based alloy layer 104 can be propagated. In certain instances, new cracks 162 can be initiated in either the metal-based alloy layer 104 or the active material layer. Delamination regions 154 initiated during charging can be propagated and new delamination regions can be produced as a result of discharge and associated shrinkage of alloying particle 152. Crack propagation and delamination together with the induced voids result in an anode that exhibits high rate resistance and low rate capability.

In the method disclosed herein, discharge occurs at an activation speed (As) that is greater than the contraction rate (R_{C}) of the alloying particles such that the volume of the alloying particles subsequent to discharge is at least greater than the volume of the alloying particles in the anode as manufactured. In certain embodiments it is believed that the volume of the alloying particles subsequent to discharge is essentially equal to the volume of the alloying particles upon full lithiation upon charging.

Without being bound to any theory, it is believed that rapid delithiation from of the lithiated alloying particles maintains the apparent particle size of alloying particles resulting in good electronic conductivity between alloying particles 152 to the body 118 and less volume loss of entire active materials layers 104 and 110 including alloying particles 152.

As described above, the method for preparing the lithium ion battery according to the present embodiment is a preconditioning process before using the lithium ion battery. The method for preparing the lithium ion battery includes the step of, after a unit cell has been formed, the unit cell having a cathode, a separator, an electrolyte, and a metal-based anode, the metal-based anode having alloying particles present therein, applying a high C-rate discharging current to the unit cell. The preparation method further includes the step of, after application of the high C-rate discharging current has been discontinued, applying a high C-rate charging current to the unit cell to charge the unit cell to an elevated state of charge which is at or above 90% of maximum state of charge for the unit cell. The high C-rate discharging current (C_{HD}) is sufficient to secure conductive pathways in at least one structure present in the unit cell. The high C-rate discharging current (C_{HD}) applied is greater than a C-rate operating current (C_{O}) passing through the metal-based anode during use of the lithium ion battery. The high C-rate charging current has a value greater than the C-rate operating current (C_{O}) passing through the metal-based anode during use of the lithium ion battery.

The high C-rate discharging current applied to the anode (C_{HD}) is in a range between 3C and 7C. The high C-rate discharging current applied preferably results in delithiation of alloying particles producing porous alloying particles.

The high C-rate discharging current applied preferably has a variable value in a range between 3C and 7C for at least one interval during the high C-rate discharging current application step.

The high C-rate discharging current applied preferably varies decrementally between 7C and 3C during the high C-rate discharging current application step.

The method for preparing the lithium ion battery further includes the step of discontinuing the high C-rate discharging current application step when the unit cell reaches a reduced state of charge, wherein the reduced state of charge preferably has a value less than 5% of maximum charge of the unit cell.

The method for preparing the lithium ion battery further includes the step of discontinuing the high C-rate discharging current application step when the unit cell reaches a reduced state of charge, wherein the reduced state of charge preferably has a value of 0% of maximum charge of the unit cell.

The method for preparing the lithium ion battery preferably consists of one discharging current application step and one charging step.

The method for preparing the lithium ion battery according to the present embodiment is a preconditioning process before using the lithium ion battery. The method for preparing the lithium ion battery includes the step of, after a unit cell has been formed, the unit cell having a cathode, a separator, an electrolyte, and a metal-based anode, the metal-based anode having alloying particles present therein, applying a discharging current to the unit cell to trigger initial delithiation of the alloying particles. The preparation method further includes the step of, after discontinuation of the application of the discharging current, applying a high C-rate charging current having a value between 3C and 6C to the unit cell. The metal-based anode has the alloying particles exhibiting an expansion rate (R_{E}) upon lithiation and a contraction rate (R_{C}) upon initial delithiation, the alloying particles having an initial volume and an expanded volume subsequent to initial charging. Application of the discharging current activates the alloying particles at an activation speed (A_{S}), and the activation speed (A_{S}) is greater than the contraction rate (R_{C}) of the alloying particles.

The discharging current applied has a C-rate between 3C and 7C which is a first incremental value. The preparation method further includes the steps of discontinuing the discharging current application step when the unit cell reaches a reduced state of charge having a value of 0% of maximum charge of the unit cell, and charging the unit cell to a value equal to an elevated state of charge having 100% of a state of charge after the discharge current application step has been discontinued.

The preparation method further includes the step of, after the unit cell has achieved the elevated state of charge, applying a high C-rate discharging current to the unit cell, the high C-rate discharging current having a second incremental value less than the first incremental value. The preparation method further includes the steps of discontinuing the high C-rate discharging current application step when the unit cell reaches a reduced state of charge, the reduced state of charge having a value of 0% of maximum charge of the unit cell, and charging the unit cell to the elevated state of charge after the high C-rate discharging current application has been discontinued.

The second incremental value is preferably at least 0.25C lower than the first incremental value.

The method for preparing the lithium ion battery according to the present embodiment is a method of improving battery life in the lithium ion battery having at least one copper metal based alloy anode. The method for preparing the lithium ion battery includes the step of forming a lithium ion battery having at least one unit cell, the at least one unit cell having a cathode, a separator, an electrolyte, and the metal-based anode including copper. The metal-based anode has alloying particles, the alloying particles has an initial volume and an expanded volume subsequent to initial charging, the alloying particles exhibiting an expansion rate (R_{E}) upon lithiation and a contraction rate (R_{C}) upon initial delithiation upon discharge. The lithium ion battery obtained in the forming step has an initial elevated state of charge.

The method for preparing the lithium ion battery further includes the step of preconditioning the lithium ion battery, the preconditioning step including applying a high C-rate discharging current to the unit cell, and recharging the unit cell at a C-rate between 3C and 6C to an elevated state of charge. Application of the high C-rate discharging current activates the alloying particles at an activation speed (A_{S}). The activation speed (A_{S}) is greater than the contraction rate (R_{C}) of the alloying particles for an interval and in an amount sufficient to reduce the initial elevated state of charge to a reduced state of charge, and the high C-rate discharging current is between 3C and 7C. The elevated state of charge has a value level equivalent to 100% of a state of charge. The phrase "initial elevated state of charge" refers to a charging level of the lithium ion battery obtained in the forming step before the preconditioning step.

The high C-rate discharging current has a value sufficient to secure electronic conductive pathways in at least one structure present in the unit cell. The high C-rate discharging current applied results in delithiation of alloying particles and produces porous structure therein having a particle volume after discharge that is greater than the initial volume.

The high C-rate discharge current application step and recharging step are preferably repeated sequentially, and the high C-rate discharging current is preferably 7C in the initial applying step and is reduced by between 0.25C and 1C with each sequential iteration.

### [Comparative Example 1]

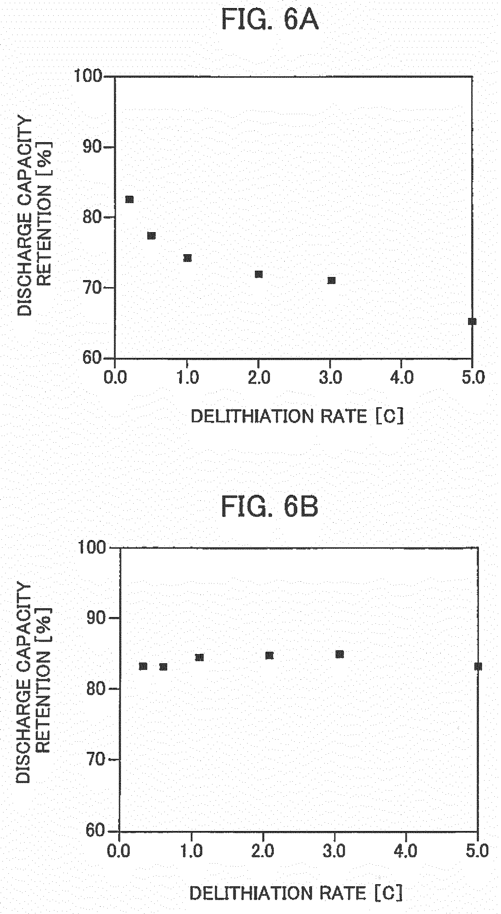

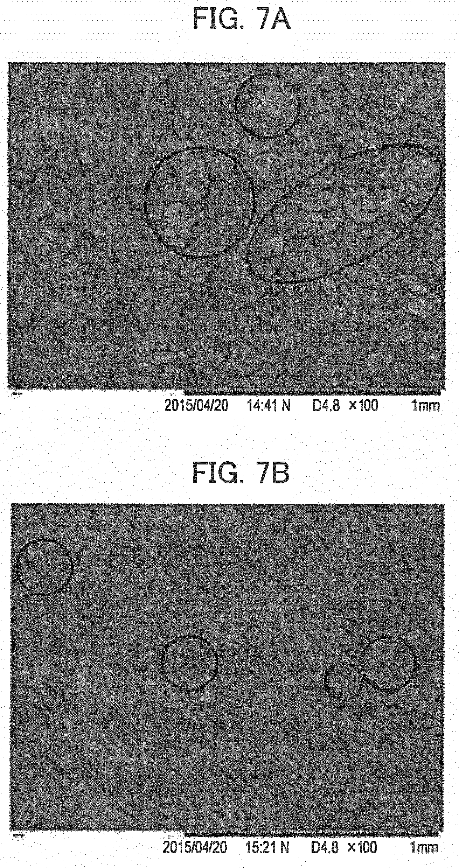

A lithium ion battery is prepared applying a standard formation cycle to unit cells. A rate capability check is performed in sequential order from 0.1C to 5C rate on the resulting unit cell. The rate capabilities are illustrated in Fig. 6A. The anode exhibits a monotonous decrease in performance with increasing C-rate. Scanning electromicrographic analysis performed at 100X indicate multiple areas of delamination as depicted in Fig. 7A.

### [Example 1]

A lithium ion battery is prepared applying the standard formation cycle to unit cells as outlined in Comparative Example 1. A high C-rate discharging current having a value of 7C is applied to the unit cell for an interval sufficient to produce a state of charge in the unit cell of 0%. The unit cell is charged back to 100% state of charge by application of a charging C-rate of 1C for and interval sufficient to achieve 100% SOC. A rate capability check is performed on the resulting cell in sequential order from 5C to 0.1C a intervals of 5C, 3C, 2C, 1C, 0.5C and 0.1C. The rate capabilities are illustrated in Fig. 6B. The anode exhibits a stable dependence of discharge capacity retention percentage as a function of C-rate. Scanning electromicrographic analysis of the anode at 100X is depicted in Fig. 7B. Fewer areas of delamination are noted as compared to the electromicrograph of Fig. 7A. The SEM analysis of this anode also evidences a plurality of pores.

### [Example 2]

A lithium ion battery is prepared applying the standard formation cycle to unit cells as outlined in Comparative Example 1. A high C-rate discharging current having a value of 3C is applied to the unit cell for an interval sufficient to produce a state of charge in the unit cell of 0%. The unit cell is charged back to 100% state of charge by application of a charging C-rate of C/20 for and interval sufficient to achieve 100% SOC. A rate capability check is performed on the resulting unit cell in sequential order from 5C to 0.1C rate indicates that unit cell performance is similar to that demonstrated in Example 1.

### [Example 3]

A lithium ion battery is prepared applying the standard formation cycle to unit cells as outlined in Comparative Example 1. An initial high C-rate discharging current having a value of 7C is applied to the unit cell for an interval sufficient to produce a state of charge in the unit cell of 0%. The unit cell is charged back to 100% state of charge by application of a charging C-rate of 1C for and interval sufficient to achieve 100% SOC. The unit cell is then subjected to application of a discharging current having a value of 5C followed by application of a charging C-rate of 1C. Discharging and charging steps are repeated over several cycles using discharge rates of 3 C; 1 C and 0.1 C respectively. A rate capability check performed on the unit cell in sequential order from 5C to 0.1C respectively indicates that unit cell performance is similar to that demonstrated in Example 1.

### REFERENCE SIGNS LIST

- 102, 202: anode
- 152: alloying particles

## Claims

1. A method for preparing a lithium ion battery having at least one unit cell; said method comprising the step of:
prior to using the lithium ion battery, applying a high C-rate discharging current (C_{HD}) to an unit cell, the unit cell having a cathode, a separator, an electrolyte, and a metal-based anode composed of a metal alloy, the metal based anode having alloying particles present therein, wherein the high C-rate discharging current (C_{HD}) applied is greater than a C-rate operating current (C_{O}) passing through the metal-based anode; and
after application of the high C-rate discharging current (C_{HD}) has been discontinued, applying a high C-rate charging current to the unit cell to charge the unit cell to an elevated state of charge which is at or above 90% of a maximum state of charge for the unit cell, the high C-rate charging current having a value greater than the C-rate operating current (C_{O}) passing through the metal-based anode,
wherein the high C-rate charging current is applied at a C-rate between 3C and 6C, and
wherein the high C-rate discharging current (C_{HD}) is applied in a range between 3C and 7C.

2. The method for preparing a lithium ion battery according to claim 1, wherein the metal alloy comprises copper and at least one element that alloys with copper.

3. The method for preparing a lithium ion battery according to claim 2, wherein the at least one element that alloys with copper is at least one of tin, molybdenum, niobium, tungsten, tantalum and iron.

4. The method for preparing a lithium ion battery according to claim 1, wherein the alloying particles are selected from the group consisting of silicon, germanium, tin, oxides of silicon, oxides of germanium and mixtures thereof.

5. The method for preparing a lithium ion battery according to any one of claims 1 to 4, wherein the high C-rate discharging current (C_{HD}) applied results in delithiation of alloying particles producing porous alloying particles.

6. The method for preparing a lithium ion battery according to claim 5, wherein the high C-rate discharging current (C_{HD}) applied has a variable value in a range between 3C and 7C for at least one interval during the high C-rate discharging current application step.

7. The method for preparing a lithium ion battery according to claim 5, wherein the high C-rate discharging current (C_{HD}) applied varies decrementally between 7C and 3C during the high C-rate discharging current application step.

8. The method for preparing a lithium ion battery according to any one of claims 1 to 7 further comprising the step of discontinuing the high C-rate discharging current application step when the unit cell reaches a reduced state of charge, wherein the reduced state of charge has a value less than 5% of a maximum charge for the unit cell.

9. The method for preparing a lithium ion battery according to any one of claims 1 to 8 further comprising the step of discontinuing the high C-rate discharging current application step when the unit cell reaches a reduced state of charge, wherein the reduced state of charge has a value of 0% of a maximum charge for the unit cell.

10. The method for preparing a lithium ion battery according to any one of claims 1 to 9, wherein the method for preparing consists of one discharging current application step and one charging step.

11. A lithium ion battery prepared by the method according to any one of claims 1 to 10.

## Patentansprüche

1. Verfahren zur Herstellung einer Lithiumionenbatterie mit mindestens einer Einheitszelle, wobei das Verfahren den folgenden Schritt umfasst:
Entladen einer Einheitszelle mit einem Entladestrom (C_{HD}) mit hohem C-Koeffizienten vor der Verwendung der Lithiumionenbatterie, wobei die Einheitszelle eine Kathode, einen Separator, einen Elektrolyten und eine metallbasierte Anode aus einer Metalllegierung aufweist, wobei die metallbasierte Anode darin enthaltene Legierungspartikel aufweist, wobei der Entladestrom (C_{HD}) mit hohem C-Koeffizienten größer ist als der C-Raten-Betriebsstrom (C_{O}), der durch die metallbasierte Anode fließt; und,
nachdem das Entladen mit dem Entladestrom (C_{HD}) mit hohem C-Koeffizienten unterbrochen wurde, ein Ladestrom mit hohem C-Koeffizienten an die Einheitszelle angelegt wird, um die Einheitszelle auf einen erhöhten Ladezustand aufzuladen, der bei oder über 90% des maximalen Ladezustands der Einheitszelle liegt, wobei der Ladestrom mit hohem C-Koeffizienten einen Wert aufweist, der größer ist als der C-Koeffizienten-Betriebsstrom (C_{O}), der durch die metallbasierte Anode fließt;
wobei der Ladestrom mit hohem C-Koeffizienten mit einem C-Koeffizienten zwischen 3C und 6C angelegt wird und
wobei der Entladestrom mit hohem C-Koeffizienten (C_{HD}) in einem Bereich zwischen 3C und 7C liegt.

2. Verfahren zur Herstellung einer Lithiumionenbatterie nach Anspruch 1, **dadurch gekennzeichnet, dass** die Metalllegierung Kupfer und mindestens ein mit Kupfer legiertes Element umfasst.

3. Verfahren zur Herstellung einer Lithiumionenbatterie nach Anspruch 2, wobei das mindestens eine mit Kupfer legierte Element mindestens eines von Zinn, Molybdän, Niob, Wolfram, Tantal und Eisen ist.

4. Verfahren zur Herstellung einer Lithiumionenbatterie nach einem der Ansprüche 1 bis 3, **dadurch gekennzeichnet, dass** die Legierungspartikel ausgewählt sind aus der Gruppe bestehend aus Silicium, Germanium, Zinn, Siliciumoxiden, Germaniumoxiden und Gemischen davon.

5. Verfahren zur Herstellung einer Lithiumionenbatterie nach einem der Ansprüche 1 bis 4, wobei die Anwendung des Entladestroms (C_{HD}) mit hohem C-Koeffizienten zur Delithiierung von Legierungspartikeln führt, wodurch poröse Legierungspartikel erzeugt werden.

6. Verfahren zum Herstellen einer Lithiumionenbatterie nach Anspruch 5, wobei der Entladestrom (C_{HD}) mit hohem C-Koeffizienten für mindestens ein Intervall während der Anwendung des Entladestroms (C_{HD}) mit hohem C-Koeffizienten einen variablen Wert in einem Bereich zwischen 3C und 7C aufweist.

7. Verfahren zum Herstellen einer Lithiumionenbatterie nach Anspruch 5, wobei der Entladestrom (C_{HD}) mit hohem C-Koeffizienten während der Anwendung des Entladestroms (C_{HD}) mit hohem C-Koeffizienten dekremental zwischen 7C und 3C variiert.

8. Verfahren zur Herstellung einer Lithiumionenbatterie nach einem der Ansprüche 1 bis 7, wobei ferner die Entladung mit dem Entladestrom (C_{HD}) mit hohem C-Koeffizienten unterbrochen wird, wenn die Einheitszelle einen reduzierten Ladezustand erreicht, wobei der reduzierte Ladezustand einen Wert von weniger als 5% des maximalen Ladezustands der Einheitszelle aufweist.

9. Verfahren zur Herstellung einer Lithiumionenbatterie nach einem der Ansprüche 1 bis 8, wobei ferner die Entladung mit dem Entladestrom (C_{HD}) mit hohem C-Koeffizienten unterbrochen wird, wenn die Einheitszelle einen reduzierten Ladezustand erreicht, wobei der reduzierte Ladezustand einen Wert von 0% des maximalen Ladezustands der Einheitszelle aufweist.

10. Verfahren zur Herstellung einer Lithiumionenbatterie nach einem der Ansprüche 1 bis 9, wobei das Verfahren zur Herstellung aus einem Entladungsschritt und einem Ladeschritt besteht.

11. Lithiumionenbatterie, hergestellt nach dem Verfahren nach einem der Ansprüche 1 bis 10.

## Revendications

1. Procédé de préparation d'une batterie lithium-ion disposant d'au moins une cellule unitaire ; ledit procédé comprenant l'étape de :
avant d'utiliser la batterie lithium-ion, application d'un courant de décharge à valeur C-rate élevée (C_{HD}) à une cellule unitaire, la cellule unitaire présentant une cathode, un séparateur, un électrolyte, et une anode à base métallique composée d'un alliage métallique, l'anode à base métallique présentant des particules d'alliage au sein de celle-ci, dans lequel le courant de décharge à valeur C-rate élevée (C_{HD}) appliqué est supérieur à un courant de fonctionnement à valeur C-rate donnée (C_{O}) traversant l'anode à base métallique ; et
après qu'une application du courant de décharge à valeur C-rate élevée (C_{HD}) a été interrompue, application d'un courant de charge à valeur C-rate élevée à la cellule unitaire pour charger la cellule unitaire jusqu'à un état de charge élevé qui est à ou au-dessus de 90 % d'un état de charge maximal pour la cellule unitaire, le courant de charge à valeur C-rate élevée (C_{HD}) présentant une valeur supérieure au courant de fonctionnement à valeur C-rate donnée (C_{O}) traversant l'anode à base métallique,
dans lequel le courant de charge à valeur C-rate élevée est appliqué à une valeur C-rate entre 3C et 6C, et
dans lequel le courant de décharge à valeur C-rate élevée (C_{HD}) est appliqué dans une plage entre 3C et 7C.

2. Le procédé de préparation d'une batterie lithium-ion selon la revendication 1, dans lequel l'alliage métallique comprend du cuivre et au moins un élément en alliage de cuivre.

3. Le procédé de préparation d'une batterie lithium-ion selon la revendication 2, dans lequel l'au moins un élément qui fait alliage avec du cuivre est au moins un d'étain, de molybdène, de niobium, de tungstène, de tantale et de fer.

4. Le procédé de préparation d'une batterie lithium-ion selon la revendication 1, dans lequel les particules d'alliage sont sélectionnées à partir du groupe consistant en du silicium, du germanium, de l'étain, des oxydes de silicium, des oxydes de germanium et des mélanges de ceux-ci.

5. Le procédé de préparation d'une batterie lithium-ion selon l'une quelconque des revendications 1 à 4, dans lequel le courant de décharge à valeur C-rate élevée (C_{HD}) appliqué résulte en une délithiation de particules d'alliage produisant des particules d'alliage poreuses.

6. Le procédé de préparation d'une batterie lithium-ion selon la revendication 5, dans lequel le courant de décharge à valeur C-rate élevée (C_{HD}) appliqué présente une valeur variable dans une plage entre 3C et 7C pour au moins un intervalle au cours de l'étape d'application d'un courant de décharge à valeur C-rate élevée.

7. Le procédé de préparation d'une batterie lithium-ion selon la revendication 5, dans lequel le courant de décharge à valeur C-rate élevée (C_{HD}) appliqué varie de manière décrémentale entre 7C et 3C au cours de l'étape d'application d'un courant de décharge à valeur C-rate élevée.

8. Le procédé de préparation d'une batterie lithium-ion selon l'une quelconque des revendications 1 à 7 comprenant en outre l'étape d'interruption de l'étape d'application d'un courant de décharge à valeur C-rate élevée lorsque la cellule unitaire atteint un état de charge réduit, dans lequel l'état de charge réduit présente une valeur inférieure à 5 % d'une charge maximale pour la cellule unitaire.

9. Le procédé de préparation d'une batterie lithium-ion selon l'une quelconque des revendications 1 à 8 comprenant en outre l'étape d'interruption de l'étape d'application d'un courant de décharge à valeur C-rate élevée lorsque la cellule unitaire atteint un état de charge réduit,
dans lequel l'état de charge réduit présente une valeur de 0 % d'une charge maximale pour la cellule unitaire.

10. Le procédé de préparation d'une batterie lithium-ion selon l'une quelconque des revendications 1 à 9, dans lequel le procédé de préparation consiste en une étape d'application d'un courant de décharge et une étape de charge.

11. Batterie lithium-ion préparée par le procédé selon l'une quelconque des revendications 1 à 10.
